# EUROPÄISCHE PATENTSCHRIFT

(11) **EP 0 954 954 B1**
(45) Veröffentlichungstag und Bekanntmachung des Hinweises auf die Patenterteilung: **06.11.2002**
(21) Anmeldenummer: 98107919.7
(22) Anmeldetag: 30.04.1998
(51) Int. Cl.: A01D 34/13

(54) **Messerklinge für Mäh- oder Schneidwerke**
Knife section for cutter bar
Couteau pour lame de faucheuse

(43) Veröffentlichungstag der Anmeldung: 10.11.1999
(73) Patentinhaber: Frielinghaus GmbH, 58256 Ennepetal (DE)
(72) Erfinder: Braun, Wolfgang, 58256 Ennepetal (DE)
(74) Vertreter: Patentanwälte Rehberg + Hüppe

(56) Entgegenhaltungen:
- DE-A- 1 946 003
- FR-A- 868 157
- FR-A- 1 500 363
- FR-A- 2 531 605
- GB-A- 154 140
- US-A- 3 401 512

## Beschreibung

Die Erfindung betrifft eine Messerklinge für Mäh- oder Schneidwerke, die auf ihrem sich in Fahrtrichtung vorwärts erstreckenden Bereich mindestens eine Schneide und an ihrem sich nach rückwärts erstreckenden Bereich einen auf einem Messerrücken durch Nieten oder Schrauben anzubringenden Befestigungsrand aufweist. Bei solchen Messerklingen handelt es sich in der Regel um Klingen aus Stahl für den land- und forstwirtschaftlichen Bereich. die Erfindung läßt sich sowohl auf hin- und hergehend angetriebene wie auch auf stillstehend angeordnete Klingen anwenden, also überall dort, wo mehrere Klingen zusammenarbeiten und so einen Schnitt ausführen.

Messerklingen der eingangs beschriebenen Art sind aus DIN 11300, Ausgabe Oktober 1986, bekannt. Die Rohklinge wird durch einen Stanzvorgang aus einem Blechstreifen hergestellt, wobei die Rohklinge im Querschnitt überall etwa rechteckig ausgebildet ist und ansonsten den typischen Umriß einer Rohklinge aufweist. Die Rohklinge und dann später die Messerklinge weist einen Bereich auf, der sich in Fahrtrichtung nach vorwärts erstreckt und in welchem mindestens eine Schneide, häufig jedoch zwei Schneiden vorgesehen sind. Diese Schneiden werden in der Regel durch einen Schleifvorgang erzeugt, in dem eine schräg verlaufende Schneidwarte angeschliffen wird, so daß sich die dadurch erzeugte Schneide in einer Hauptfläche der Messerklinge befindet. Die Messerklinge weist in ihrem sich nach rückwärts erstreckenden Bereich einen Befestigungsrand auf, in dem in der Regel zwei Befestigungslöcher vorgesehen sind, die zugleich mit dem Stanzen der Rohklinge hergestellt werden. Die Klinge wird bei ihrer Montage auf einem Messerrücken im Bereich dieses Befestiungsrandes durch das Einsetzen von Nieten oder Schrauben aufgelagert, wobei die Nieten oder Schrauben die Löcher durchsetzen bzw. in diesen Löchern verankert sind. Die an der Messerklinge vorgesehene Schneide oder die beiden Schneiden können mit glatter oder gezahnter Schneide hergestellt sein.

Eine Messerklinge der eingangs beschriebenen Art ist auch aus der DE 42 04 000 C2 bekannt. Auch diese Messerklinge besitzt einen Schneidenbereich und einen Befestiungsbereich mit Befestigungsrand, der in entsprechende Überdeckung mit dem Messerrücken gebracht wird. Die Messerklinge kann auch einen Ausprägung aufweisen, das heißt das Material der Messerklinge ist durch einen Prägevorgang so in der Höhe verwölbt, daß in unterschiedlichen Ebenen angeordnete Bereiche über die Hauptfläche der Messerklinge entstehen.

Aus der US 3,401,512 ist ein Fingermähwerk bekannt, welches Messerklingen besitzt, die auf ihrem sich in Fahrtrichtung vorwärts erstreckenden Bereich zwei Schneiden und an ihrem sich nach rückwärts erstreckenden Bereich einen auf einem Messerrücken durch Nieten angebrachten Befestigungsrand aufweisen. Die Nieten stehen über den Befestigungsrand und den Messerrücken über. In diesem Bereich sind die Finger ausgenommen, so daß der Befestigungsrand der Messerklingen bei seiner hin- und hergehenden Bewegung gegenüber den Fingern nicht in Kontakt kommt. Auch die stillstehend angeordneten Finger sind mit Schneiden versehen, die mit den Schneiden der Messerklingen zusammenarbeiten. Im Bereich der Schneiden der Messerklingen und in dem zugehörigen Bereich der Schneiden der Finger sind jeweils Anlaufschrägen verwirklicht, um die Schneidenbereiche der Messerklingen nockenartig niederzudrücken und die Schneidenbereiche bei ihrer hinund hergehenden Bewegung effektiv zu begrenzen. Wenn die Finger durch Verbindungsstangen miteinander verbunden werden, entfällt die Notwendigkeit der Anordnung von Anlaufschrägen im Schneidenbereich.

Die bekannten Messerklingen besitzen in ihrem Befestigungsrand quadratischen Querschnitt, wie er durch den Stanzvorgang der Rohklinge erzeugt ist. Die Kanten dieses quadratischen Querschnittes, die sich auf der Seite der Klinge befinden, auf der auch die Schneiden angeordnet sind, sind mehr oder weniger scharfkantig ausgebildet, weil hier zwei in einem Winkel von 90° zueinanderstehende Flächen aufeinanderstoßen. Es handelt sich bei diesen Kanten um diejenigen Kanten, die sich in Fahrtrichtung des Mäh- oder Schneidwerkes erstrecken, die also quer zum hin- und hergehenden Antrieb der Messerklingen bzw. Mähbalken liegen. Wenn nun zwei Mähbalken mit ihrem Messerklingen im gegenseitigen Kontakt hin- und hergehend relativ zueinander bewegt werden, verursacht das gegenläufige Aneinanderstoßen der Kanten des Befestigungsrandes laute und unerwünschte Geräusche. Dies ist nicht nur dann der Fall, wenn die Messerklingen auf ihren zugehörigen Messerrücken seitlich mit Abstand zueinander befestigt werden, sondern auch dann, wenn die Befestigung Messerklinge an Messerklinge über die Länge des Messerrückens erfolgt. Um das Gegeneinanderschlagen der Kanten der Befestigungsränder und die dadurch verursachten unerwünschten Geräusche zu verhindern, ist es bekannt, die Messerbalken über die Fläche, in der sich die Schneiden befinden, über alle Messerklingen hinweg plan zu schleifen. Dies bedeutet einen nicht unerheblichen Aufwand in der Herstellung der Mähbalken für die Mähoder Schneidwerke und führt nur zu einer bedingten Reduzierung des Aneinanderstoßen und der dadurch verursachten Belastung und der entstehenden Geräusche.

Der Erfindung liegt die Aufgabe zugrunde, eine Messerklinge der eingangs beschriebenen Art bereitzustellen, bei der das Aneinanderstoßen der Kanten der Befestigungsränder sowie die dadurch verursachte Geräuschentwicklung erheblich reduziert werden, wenn zwei Mähbalken verwendet werden, die mit ihren Messerklingen im gegenseitigen Kontakt hin- und hergehend relativ zueinander bewegt werden.

Erfindungsgemäß wird dies bei einer Messerklinge der eingangs beschriebenen Art dadurch erreicht, daß der Befestigungsrand auf der die Schneide aufweisenden Rückseite der Messerklinge beidseitig je eine Anlaufschräge oder eine Abrundung besitzt, die sich in Fahrtrichtung über die wesentliche Erstreckung des Befestigungsrandes erstrecken.

Die Erfindung geht von dem Gedanken aus, die Kanten des Befestigungsrandes, die bei der hin- und hergehenden Relativbewegung der Messerklingen aneinanderstoßen, mit einer Anlaufschräge oder einer Abrundung zu versehen, so daß die aufeinanderliegenden Teile zweier Mähbalken im Bereich der Messerklingen an den Anlaufschrägen oder Abrundungen aufeinander aufgleiten können und eine schlagartige Stoßbeanspruchung an dieser Stelle nicht mehr auftritt. Solche Anlaufschrägen bzw. Abrundungen müssen sich in Fahrtrichtung über die wesentliche Erstreckung des Befestigungsrandes erstrecken, also quer zu der hin- und hergehenden Antriebsbewegung für die Messerklingen, sei es in Form eines Fingermähwerkes oder eines Doppelmessermähwerkes. Solche Anlaufschrägen oder Abrundungen lassen sich durch einen Stanzoder Prägevorgang sehr einfach mit anformen, und zwar insbesondere beim Stanzen der Rohklinge. Das Stanzwerkzeug muß diesbezüglich nur relativ wenig modifiziert werden. Damit ist sichergestellt, daß die Herstellung der Anlaufschrägen oder Abrundungen ohne nennenswerte Mehrkosten erfolgen kann. Zusätzlich entfällt das Planschleifen der Mähbalken über sämtliche aufgesetzte Messerklingen hinweg.

Besonders sinnvoll ist, wenn die Anlaufschrägen oder Abrundungen über den Befestigungsbereich am Messerrücken in Fahrtrichtung vorstehend vorgesehen sind und in die Schneiden übergehen. Die Anlaufschrägen und Abrundungen erstrecken sich somit über den gesamten Überdeckungsbereich mit dem Messerrücken und in aller Regel noch etwas weiter in Fahrtrichtung nach vorn, bis sie in die Schneiden übergehen.

Die Breite der Anlaufschrägen oder Abrundungen auf der Hauptfläche des Befestigungsrandes kann maximal etwa 3 mm betragen. In dieser Richtung ist der wesentliche Teil der Anlaufschräge oder Abrundungen angeordnet, also in Antriebsrichtung der Messerbalken quer zur Fahrtrichtung. Dies erlaubt ein sicheres Aufgleiten der Messerklingen aneinander ohne daß die Abstützfläche, über die die gegenseitige Abstützung der miteinander arbeitenden Messerklingen erfolgt, über Gebühr verkleinert wird.

In der Richtung senkrecht dazu kann die Höhe der Anlaufschrägen oder Abrundungen senkrecht zu der Hauptfläche des Befestigungsrandes maximal etwa 0,3 mm betragen. In dieser Richtung kann die Erstreckung der Anlaufschrägen oder Abrundungen erheblich geringer gewählt werden.

Die Anlaufschrägen oder Abrundungen können angeprägt oder angedrückt sein. Diese Art der Herstellung ist besonders kostengünstig und einfach. Zudem wird die Herstellung selbst durch angeprägte oder angedrückte Anlaufschrägen oder Abrundungen nicht verlängert. Das Planschleifen von Messerbalken über die aufgesetzten Messerklingen hinweg entfällt vorteilhaft.

Die Erfindung wird anhand bevorzugter Ausführungsbeispiele weiter erläutert und beschrieben. Es zeigen:
- Figur 1: eine Draufsicht auf eine Messerklinge,
- Figur 2: die Seitenansicht der Messerklinge gemäß Figur 1,
- Figur 3: eine Ansicht der Rückseite der Messerklinge gemäß Figur 1,
- Figur 4: eine Ansicht der Messerklinge gemäß Figur 1 von vorn,
- Figur 5: die vergrößerte Darstellung einer Einzelheit aus Figur 4,
- Figur 6: eine Ansicht auf die Messerklinge gemäß Figur 3 von vorn,
- Figur 7: eine Ansicht in Fahrtrichtung auf einen Mähbalken,
- Figur 8: eine Draufsicht auf den Mähbalken gemäß Figur 7,
- Figur 9: eine Ausführungsmöglichkeit der Einzelheit A in Figur 7,
- Figur 10: eine weitere Ausführungsmöglichkeit an dieser Stelle, und
- Figur 11: eine dritte Ausführungsform der Einzelheit A.

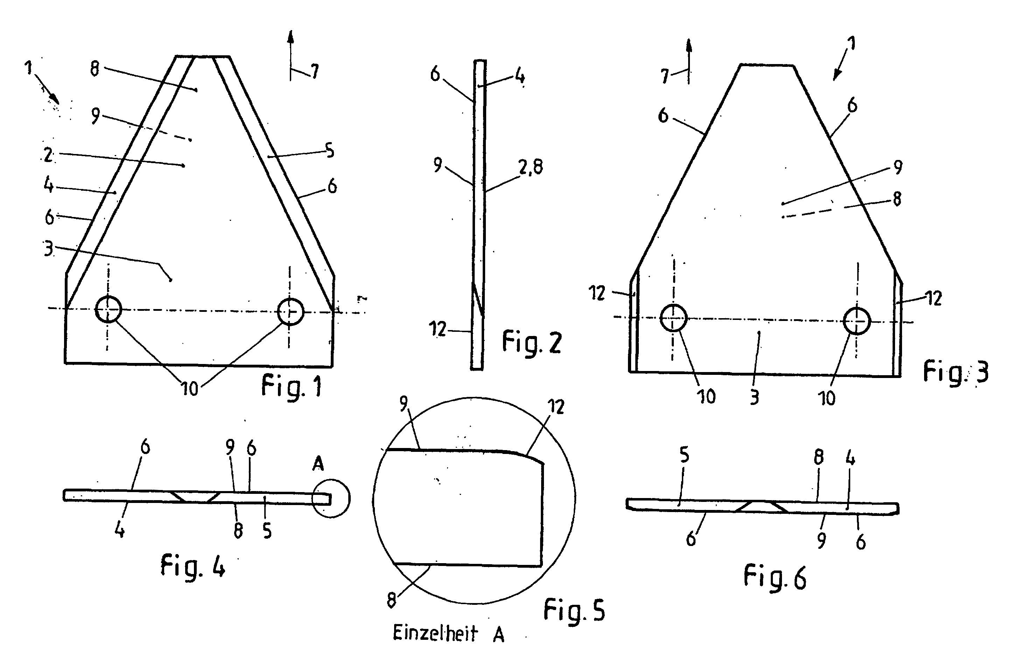

Die in Figur 1 dargestellte Messerklinge 1 weist einen Schneidenbereich 2 und einen Befestigungsrand 3 auf. Im Schneidenbereich 2 sind durch zwei angeschliffene Schneidwarten 4 und 5 zwei Schneiden 6 gebildet, die sich schräg nach vorn zur Fahrtrichtung gemäß Pfeil 7 erstrecken. Die Schneidwarten 4 und 5 beginnen auf der Vorderseite 8 der Messerklinge 1 und enden auf der Rückseite 9, so daß die Schneiden 6 selbst in der Ebene der Rückseite 9 zu liegen kommen. Figur 3 zeigt eine Draufsicht auf diese Rückseite 9.

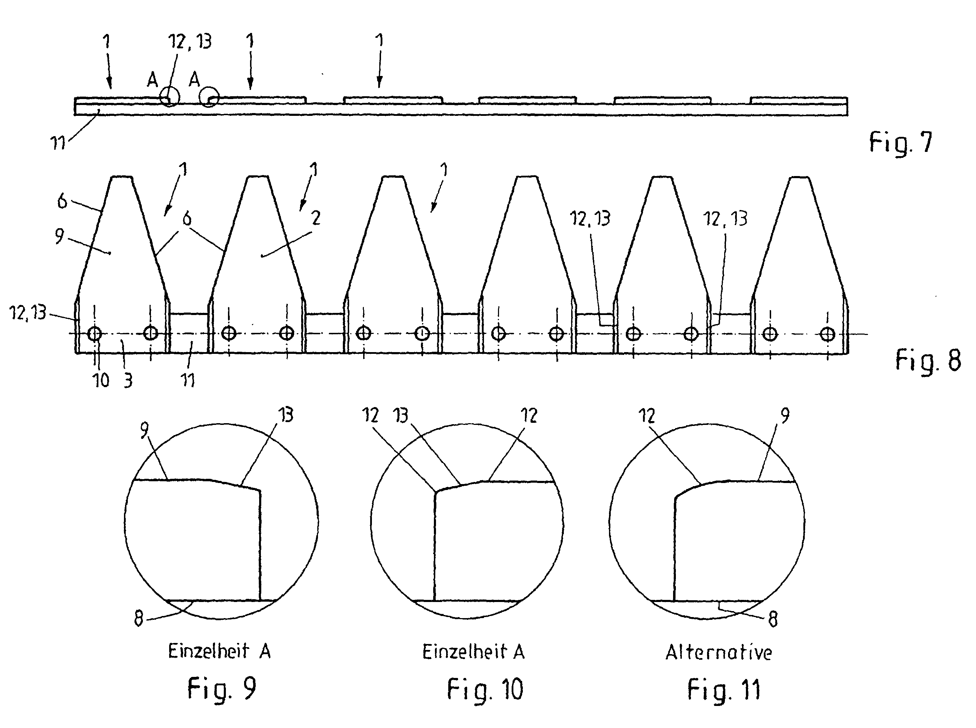

Im Bereich des Befestigungsrandes 8 sind in der Regel zwei Löcher 10 vorgesehen, die der Befestigung der Messerklinge 1 auf einem Messerrücken 11 (Figur 7 und 8) dienen. Die Befestigung erfolgt mittels Schrauben oder Nieten, die entsprechend versenkt angreifen. Der Befestigungsrand 3 weist, wie die Figuren 4 und 6 erkennen lassen, etwa quadratischen Querschnitt auf. Der Befestigungsrand besitzt auf der der Schneide 6 zugekehrten Rückseite 9 eine Abrundung 12 (Fig. 5 und 11) oder eine Anlaufschräge 13 (Fig. 9). Auch Mischformen aus einer Anlaufschräge 13 mit Abrundungen 12 (Fig. 10) sind ohne weiteres denkbar. Die Abrundung 12 bzw. die Anlaufschrägen 13 erstrecken sich über den gesamten Bereich des Befestigungsrandes 3 in Fahrtrichtung gemäß Pfeil 7 also quer zur Richtung der hin- und hergehenden Bewegung, über die die Messerklingen angetrieben sind. Auch die nicht angetriebenen Messerklingen, die mit angetriebenen Messerklingen zusammenarbeiten, sind auf diese Weise ausgebildet.

Aus den Figuren 7 und 8 ist erkennbar, daß die Messerklingen 1 auf dem zugehörigen Messerrücken 11 auch mit Abstand zueinander angeordnet sein können. Durch zwei solche Messerbalken wird dann beispielsweise ein Mähwerk gebildet, wobei die Messerklingen 1 der beiden Messerbalken mit ihren Rückseiten 9 aufeinanderliegen und Kontakt zueinander haben. Da mindestens einer der beiden Messerbalken angetrieben wird, und zwar in einer hin- und hergehenden Bewegung, gleiten die Messerklingen unterschiedlicher Messerbalken an den Abrundungen 12 bzw. Anlaufschrägen 13 aneinander ab bzw. aneinander auf, so daß eine Stoß- oder Schlagbeanspruchung entfällt und die bei der hin- und hergehenden Bewegung verursachten Geräusche erheblich gemindert sind. Die Abrundungen 12 bzw. Anlaufschrägen 13 erstrecken sich im wesentlichen in Bewegungsrichtung, das heißt hauptsächlich in der Ebene der Rückseite 9 der Messerklinge 1. Sie können hier eine Breite bis etwa 2 bis 3 mm aufweisen. In der anderen Richtung, also in der Höhenrichtung genügt die Erstreckung der Anlaufschrägen oder Abrundungen über einen Bereich von bis zu etwa 0,3 mm. Es ist erkennbar, daß die Anlaufschrägen und Abrundungen auf beiden Seiten einer Messerklinge 1 vorgesehen sind. Dies ist auch dann der Fall, wenn Messerklingen 1 verwendet werden, die nur eine Schneide 6 besitzen.

### BEZUGSZEICHENLISTE

- 1: - Messerklinge
- 2: - Schneidenbereich
- 3: - Befestigungsrand
- 4: - Schneidwarte
- 5: - Schneidwarte
- 6: - Schneide
- 7: - Pfeil
- 8: - Vorderseite
- 9: - Rückseite
- 10: - Loch
- 11: - Messerrücken
- 12: - Abrundung
- 13: - Anlaufschräge

## Patentansprüche

1. Messerklinge (1) für Mäh- oder Schneidwerke, die auf ihrem sich in Fahrtrichtung (7) vorwärts erstreckenden Bereich mindestens eine Schneide (6) und an ihrem sich nach rückwärts erstreckenden Bereich einen auf einem Messerrücken (11) durch Nieten oder Schrauben anzubringenden Befestigungsrand (3) aufweist, **dadurch gekennzeichnet, daß** der Befestigungsrand (3) auf der die Schneide (6) aufweisenden Rückseite (9) der Messerklinge (1) beidseitig je eine Anlaufschräge (13) oder eine Abrundung (12) besitzt, die sich in Fahrtrichtung (7) über die wesentliche Erstreckung des Befestigungsrandes (3) erstrecken.

2. Messerklinge nach Anspruch 1, **dadurch gekennzeichnet, daß** die Anlaufschrägen (13) oder Abrundungen (12) über den Befestigungsbereich am Messerrücken (11) in Fahrtrichtung (7) vorstehend vorgesehen sind und in die Schneiden (6) übergehen.

3. Messerklinge nach Anspruch 1 oder 2, **dadurch gekennzeichnet, daß** die Breite der Anlaufschrägen (13) oder Abrundungen (12) auf der Hauptfläche des Befestigungsrandes (3) maximal etwa 3 mm beträgt.

4. Messerklinge nach Anspruch 1, 2 oder 3, **dadurch gekennzeichnet, daß** die Höhe der Anlaufschrägen (13) oder Abrundungen (12) senkrecht zu der Hauptfläche des Befestigungsrandes (3) maximal etwa 0,3 mm beträgt.

5. Messerklinge nach einem der Ansprüche 1 bis 4, **dadurch gekennzeichnet, daß** die Anlaufschrägen (13) oder Abrundungen (12) angeprägt oder angedrückt sind.

## Claims

1. A knife blade (1) for mowing units or cutting units, the units in their portion extending in a forward direction in the direction of motion (7) at least including one cutting edge (6) and in their portion extending in a rear direction including an attachment portion (3) to be attached on a knife back (11) by rivets or screws, **characterised in that** the attachment portion (3) at the rear side (9) of the knife blade (1) which includes the cutting edge (6) at both sides includes an inclined bevel (13) or a rounded portion (12) extending over the substantial extension of the attachment portion (3) in the direction of motion (7).

2. The knife blade of claim 1, **characterised in that** the inclined bevels (13) or the rounded portions (12) are provided to protrude beyond the attachment portion at the knife back (11) in the direction of motion (7) and to blend into the cutting edges (6).

3. The knife blade of claim 1 or 2, **characterised in that** the width of the inclined bevels (13) or of the rounded portions (12) has a maximum of approximately 3 mm on the main surface of the attachment portion (3).

4. The knife blade of claim 1, 2 or 3, **characterised in that** the height of the inclined bevels (13) or of the rounded portions (12) perpendicular with respect to the main surface of the attachment portion (3) has a maximum of approximately 0.3 mm.

5. The knife blade of one of claims 1 to 4, **characterised in that** the inclined bevels (13) or the rounded portions (12) are imprinted or pressed.

## Revendications

1. Section de lame (1) pour barre de coupe de faucheuse qui présente, dans sa zone s'étendant vers l'avant en direction d'avance (7), au moins un tranchant (6) et, sur sa zone s'étendant vers l'arrière, un bord de fixation (3) destiné à être monté sur un dos de lame (11) par des rivets ou des vis,
**caractérisée en ce que** le bord de fixation (3) possède, sur la face arrière (9) de la section de lame (1) présentant le tranchant (6), des deux côtés, chaque fois un chanfrein de départ (13) ou un congé (12) qui s'étend, en direction d'avance (7), sur l'étendue substantielle du bord de fixation (3).

2. Section de lame selon la revendication 1,
**caractérisée en ce que** les chanfreins de départ (13) ou les congés (12) sont prévus sur le dos de lame (11), en saillie au-dessus de la zone de fixation dans la direction d'avance (7), et se transforment en les tranchants (6).

3. Section de lame selon la revendication 1 ou 2,
**caractérisée en ce que** la largeur des chanfreins de départ (13) ou des congés (12) est au maximum d'environ 3 mm sur la surface principale du bord de fixation (3).

4. Section de lame selon la revendication 1, 2 ou 3,
**caractérisée en ce que** la hauteur des chanfreins de départ (13) ou des congés (12), perpendiculairement à la surface principale du bord de fixation (3), est au maximum d'environ 0,3 mm.

5. Section de lame selon l'une des revendications 1 à 4,
**caractérisée en ce que** les chanfreins de départ (13) ou les congés (12) sont estampés ou pressés.
